# EUROPÄISCHE PATENTSCHRIFT

(11) **EP 0 731 011 B1**
(45) Veröffentlichungstag und Bekanntmachung des Hinweises auf die Patenterteilung: **16.12.1998**
(21) Anmeldenummer: 96100091.6
(22) Anmeldetag: 05.01.1996
(51) Int. Cl.: B62B 3/18

(54) **Einkaufswagen**
Shopping trolley
Chariot d'achat

(30) Priorität: 08.03.1995 DE 29503972 U
(43) Veröffentlichungstag der Anmeldung: 11.09.1996
(73) Patentinhaber: Brüder Siegel GmbH + Co. KG Draht- und Metallwarenfabrik, 89340 Leipheim (DE)
(72) Erfinder: Kugler, Rudolf, D-89343 Jettingen-Scheppach (DE)
(74) Vertreter: Grättinger & Partner (GbR)

(56) Entgegenhaltungen:
- EP-A- 0 141 398
- EP-A- 0 609 663
- DE-A- 2 742 958
- DE-A- 3 043 600
- DE-A- 3 445 596
- US-A- 2 890 058

## Beschreibung

Die vorliegende Erfindung betrifft einen Einkaufswagen, umfassend ein Fahrgestell, einen Warenbehälter, der sich mittels mindestens zweier Träger auf dem Fahrgestell abstützt, und einen unterhalb des Warenbehälters angeordneten, sich bevorzugt im wesentlichen über die gesamte Länge des Fahrgestells erstreckenden Ablagerost, der eine vordere, tiefere und eine hintere, erhöhte Abstellfläche aufweist und um eine horizontale Achse schwenkbar am Fahrgestell aufgehängt ist.

Einkaufswagen mit einem unterhalb des Warenbehälters angeordnetem Ablagerost sind in vielfältigen Ausgestaltungen bekannt und im Einsatz. Beschrieben sind sie beispielsweise in der französischen Patentanmeldung 2 314 854 und der deutschen Patentschrift 30 43 600. Der Ablagerost dient dabei der Aufnahme von sperrigen Gebinden, beispielweise Getränkekisten, großen Kartons, Säcken und dgl. Er nimmt in seiner Gebrauchsstellung im allgemeinen eine horizontale oder leicht nach hinten geneigte Lage ein. Durch die schwenkbare Aufhängung kann beim Stapeln zweier Einkaufswagen der Ablagerost aus seiner Gebrauchsstellung in eine Stapelstellung gebracht werden, in welcher die Ablageroste zweier gestapelter Einkaufswagen gestaffelt aufeinanderliegen.

Beim gattungsgemäßen Einkaufswagen gemäß der deutschen Patentschrift 30 43 600 weist der Ablagerost einen hinteren, erhöhten in Fahrtrichtung geneigten Abschnitt auf, der zusammen mit den Trägern für den Warenbehälter ein zur Aufnahme von Getränkekisten vorgesehenes Fach bildet, das von der Rückseite des Einkaufswagens aus beschickbar ist. Der hintere, in Fahrtrichtung geneigte Abschnitt des Ablagerostes bildet dabei den Boden des zur Aufnahme der Getränkekiste vorgesehenen Faches.

Beim Beschicken des hinteren Faches mit einer Getränkekiste besteht allerdings die Gefahr, daß sich der Kunde verletzt. Denn die seitlichen Grifföffnungen der Getränkekiste liegen genau im Bereich der Träger für den Warenkorb. Nachdem bei breiten Getränkekisten die zwischen den beiden Seitenwänden der Getränkekiste und den benachbarten Trägern des Einkaufswagens verbleibenden Spalte relativ schmal sind, besteht eine beträchtliche Gefahr, daß sich der Kunde eine oder beide Hände einquetscht. Diese Gefahr wird dadurch verstärkt, daß die auf dem hinteren, nach vorn geneigten Abschnitt des Ablagerostes abgestellte Getränkekiste aufgrund der Schwerkraft selbsttätig nach vorne gleitet.

Der vorliegenden Erfindung liegt die Aufgabe zugrunde, einen gattungsgemäßen Einkaufswagen zu schaffen, dessen Ablagerost bequem und gefahrlos beladen werden kann. Insbesondere soll die Gefahr, daß sich der Kunde beim Beladen des Ablagerosts verletzt, reduziert werden.

Gemäß der vorliegenden Erfindung wird diese Aufgabe dadurch gelöst, daß der Ablagerost gestuft ausgebildet ist und daß die hintere Abstellfläche eine nach hinten (entgegen der Fahrtrichtung) geneigte Lage einnimmt. Denn indem die hintere Abstellfläche infolge der Stufung des Ablagerostes gegenüber der vorderen Abstellfläche erhöht und zudem nach hinten geneigt ist, gelangen bei herkömmlich dimensionierten, auf der hinteren Abstellfläche abgestellten Getränkekisten die in den Seitenwänden vorgesehenen Grifföffnungen außerhalb des Bereichs, in dem die im allgemeinen schräg nach vorn geneigten Träger des Warenkorbes verlaufen. Bei dem erfindungsgemäßen Einkaufswagen ergibt sich ein maximaler Abstand der in den Seitenwänden des Getränkekastens angeordneten Grifföffnungen von den Trägern für den Warenbehälter. Zudem ergibt sich durch die erfindungsgemäße Gestaltung des Einkaufswagens eine besonders gute Ausnutzung des auf dem Ablagerost zur Verfügung stehenden Raumes. Denn ein toter Raum läßt sich auf diese Weise weitgehend vermeiden. Und außerdem läßt sich eine nach hinten geneigte hintere Abstellfläche bequemer beladen, als dies für den Stand der Technik zutrifft. Denn eine auf der hinteren Abstellfläche abzustellende Getränkekiste braucht lediglich von oben her, entlang der Rückwand des Warenbehälters auf die hintere Abstellfläche aufgesetzt zu werden. Dies macht die hintere Abstellfläche des Ablagerostes im übrigen auch zur Aufnahme hoher Kisten bzw. Kartons geeignet, die sich in dem rückwärtigen Fach des Einkaufswagens nach der DE-OS 30 43 600 nicht unterbringen lassen. Denn die entsprechende Kiste kann sich durchaus hinter der Rückwand des Warenbehälters nach oben erstrecken.

Eine optimale Ausnutzung des auf dem Ablagerost zur Verfügung stehenden Raumes ergibt sich dabei, wenn die Ebene der hinteren Abstellfläche mit derjenigen der Rückwand des Warenbehälters etwa einen rechten Winkel einschließt. Ebenfalls für die Nutzung des zur Beladung des Ablagerostes zur Verfügung stehenden Raumes ist es dabei von Vorteil, wenn sich die hintere Abstellfläche ausschließlich hinter der durch die Rückwand des Warenbehälters definierten Ebene erstreckt. Bei einer derartigen Weiterbildung des erfindungsgemäßen Einkaufswagens ragt, mit anderen Worten, die hintere Abstellfläche nicht in den Bereich hinein, der vor der durch die Rückwand des Warenbehälters definierten Ebene liegt.

Um zu verhindern, daß eine auf der hinteren, nach hinten geneigten Abstellfläche abgestellte Getränkekiste nach hinten abrutscht, ist im Bereich der hinteren Kante der Abstellfläche zweckmäßigerweise ein Anschlag vorgesehen.

Eine Weiterbildung des erfindungsgemäßen Einkaufswagens ist dadurch gekennzeichnet, daß die hintere Abstellfläche auf einer sich quer zur Fahrtrichtung erstreckenden Querstrebe aufliegt. Besonders bevorzugt verbindet dabei die Querstrebe die Träger für den Warenbehälter miteinander. Die Querstrebe kann dabei in der Weise profiliert sein, daß sie den auf ihr aufliegenden Bodenrost seitlich abstützt und auf diese Weise zentriert. Insbesondere kann zu diesem Zweck die Querstrebe auf der Breite der hinteren Abstellfläche an dieser Stelle nach unten durchgesetzt sein.

Ergänzend zur vorstehend erläuterten Querstrebe oder alternativ hierzu kann ein weiteres Stützelement vorgesehen sein, welches die hintere Abstellfläche unmittelbar auf dem Fahrgestell abstützt. Auch dieses Stützelement kann durch entsprechende Profilierung der Zentrierung des Ablagerostes in seinem hinteren Bereich dienen. Dazu kann insbesondere vorgesehen sein, daß eine an dem Bodenrost befestigte Stütze seitlich nach unten abgekantet ist, wobei die Längsholme des Fahrgestells zwischen diesen beiden Abkantungen zu liegen kommen. Ein seitliches Verrutschen des Ablagerostes ist hierdurch sicher verhindert. Auf diese Weise wird die Last eines auf der hinteren Abstellfläche abgestellten Getränkekastens unmittelbar in das Fahrgestell eingeleitet, ohne daß der Ablagerost Biegebeanspruchungen ausgesetzt wäre.

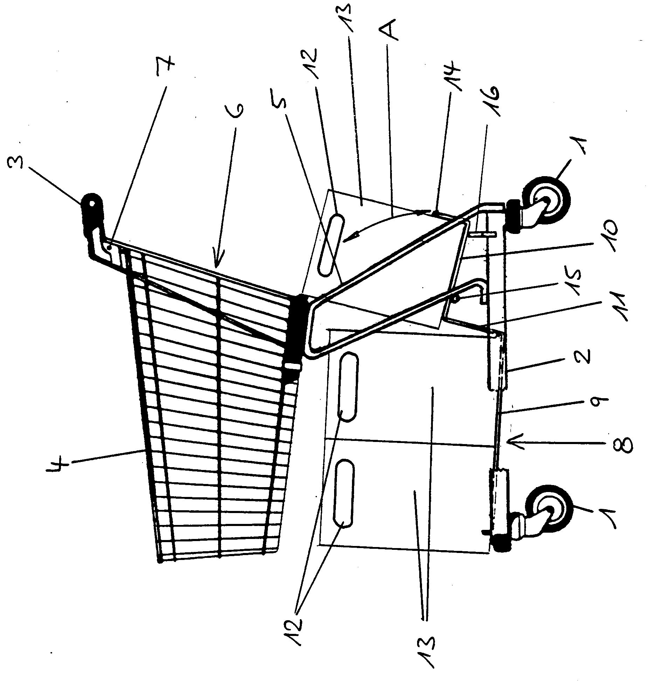

Im folgenden wird die Erfindung anhand der Zeichnung näher erläutert. Diese zeigt eine Seitenansicht einer bevorzugten Ausführungsform des erfindungsgemäßen Einkaufswagens.

Der grundsätzliche Aufbau des in der Zeichnung dargestellten Einkaufswagens entspricht dem allgemein bekannten Stand der Technik. Und zwar umfaßt der Einkaufswagen ein mit vier Lenkrollen 1 ausgestattetes Fahrgestell 2, einen an seinem rückwärtigen Ende mit einer Schiebegriffeinrichtung 3 versehenen korbartigen Warenbehälter 4 sowie Träger 5, mittels derer sich der Warenbehälter 4 auf dem Fahrgestell 2 abstützt. Um die Stapelbarkeit mehrer Einkaufswagen zu gewährleisten, verjüngen sich das Fahrgestell 2 und der Warenbehälter 4 in Fahrtrichtung, und die Rückwand des Warenbehälters 4 ist um eine horizontale Achse 7 in das Innere des Warenbehälters schwenkbar aufgehängt.

Der Ablagerost 8 erstreckt sich im wesentlichen über die gesamte Länge des Fahrgestells 2. Er ist oberhalb der vorderen Räder um eine horizontale, quer zur Fahrtrichtung verlaufende Achse schwenkbar an dem Fahrgestell angelenkt. Auf diese Weise kann er beim Stapeln mehrerer Einkaufswagen aus seiner in der Zeichnung dargestellten Gebrauchsstellung in eine Stapelstellung gebracht werden (Pfeil A), in welcher die Ablageroste zweier gestapelter Einkaufswagen gestaffelt aufeinanderliegen.

Der Ablagerost 8 umfaßt eine vordere Abstellfläche 9 und eine hintere Abstellfläche 10. Er ist dabei in der Weise gestuft ausgebildet, daß infolge der Stufe 11 die hintere Ablagefläche 10 höher liegt als die tiefer angeordnete vordere Abstellfläche 9. Die hintere Abstellfläche 10 ist dabei nach hinten (entgegen der Fahrtrichtung) geneigt. Und zwar steht die durch die hintere Abstellfläche 10 definierte Ebene etwa rechtwinklig auf der durch die hintere Rückwand 6 des Warenbehälters definierten Ebene.

Die hintere Abstellfläche 10 erstreckt sich dabei ausschließlich hinter der durch die Rückwand 6 des Warenbehälters 4 definierten Ebene. Dies führt, wie die Zeichnung verdeutlicht, zu einer optimalen Ausnutzbarkeit des auf dem Ablagerost zur Verfügung stehenden Raumes; denn auf dem Ablagerost 8 lassen sich drei großvolumige Kisten bequem unterbringen. Die seitlichen Grifföffnungen 12 der Kisten 13 liegen dabei jeweils außerhalb des Bereichs, in dem die Träger 5 für den Warenbehälter 4 verlaufen, so daß keine Verletzungsgefahr besteht.

An der hinteren Kante der hinteren Abstellfläche 10 ist ein Anschlag 14 vorgesehen, an dem sich die nach hinten weisende Seitenwand der entsprechenden Getränkekiste abstützt. Eine auf der hinteren Abstellfläche aufgenommene Getränkekiste wird durch den Anschlag 14 daran gehindert, nach hinten abzurutschen.

Eine sich quer zur Fahrtrichtung erstreckende Querstrebe 15 ist mit den beiden Trägern 5 fest verbunden. Auf ihr stützt sich die hintere Abstellfläche in der in der Zeichnung dargestellten Gebrauchsstellung des Ablagerostes ab. Desweiteren ist an der Unterseite der hinteren Abstellfläche 10 ein Stützdraht 16 angebracht. Endseitig ist der Stützdraht Doppel-S-förmig abgekröpft, so daß ein horizontaler Abschnitt jeweils auf dem Längsholm des Fahrgestells aufliegt und ein äußerer, nach unten abgekröpfter Endabschnitt seitlich an dem entsprechenden Längsholm des Fahrgestells anliegt und den Bodenrost dadurch zentriert. Die auf die hintere Abstellfläche 10 wirkende Last wird auf diese Weise, ohne in dem Ablagerost nennenswerte Biegebeanspruchungen zu verursachen, zum Teil über die Träger 5, zum anderen Teil direkt in das Fahrgestell 2 eingeleitet.

## Patentansprüche

1. Einkaufswagen, umfassend ein Fahrgestell (2), einen Warenbehälter (4), der sich mittels mindestens zweier Träger (5) auf dem Fahrgestell abstützt, und einen unterhalb des Warenbehälters angeordneten Ablagerost (8), der eine vordere, tiefere (9) und eine hintere, erhöhte (10) Abstellfläche aufweist und um eine horizontale Achse schwenkbar am Fahrgestell (2) aufgehängt ist,
dadurch gekennzeichnet,
daß der Ablagerost (8) gestuft ausgebildet ist und daß die hintere Abstellfläche (10) eine nach hinten geneigte Lage einnimmt.

2. Einkaufswagen nach Anspruch 1,
dadurch gekennzeichnet,
daß die Ebene der hinteren Abstellfläche (10) mit der Ebene der Rückwand (6) des Warenbehälters (4) etwa einen rechten Winkel einschließt.

3. Einkaufswagen nach Anspruch 1,
dadurch gekennzeichnet,
daß sich die hintere Abstellfläche (10) ausschließlich hinter der durch die Rückwand (6) des Warenbehälters (4) definierten Ebene erstreckt.

4. Einkaufswagen nach Anspruch 1,
dadurch gekennzeichnet,
daß im Bereich der hinteren Kante der hinteren Abstellfläche (10) ein Anschlag (14) vorgesehen ist.

5. Einkaufswagen nach Anspruch 1,
dadurch gekennzeichnet,
daß die hintere Abstellfläche (10) auf einer sich quer zur Fahrtrichtung erstreckenden Querstrebe (15) aufliegt.

6. Einkaufswagen nach Anspruch 5,
dadurch gekennzeichnet,
daß die Querstrebe (15) die Träger (5) für den Warenbehälter (4) miteinander verbindet.

7. Einkaufswagen nach Anspruch 5,
dadurch gekennzeichnet,
daß die Querstrebe (5) eine den Bodenrost seitlich stützende und justierende profilierte Form aufweist.

8. Einkaufswagen nach Anspruch 1,
dadurch gekennzeichnet,
daß mit dem Ablagerost (8) im Bereich der hinteren Abstellfläche (10) ein Stützelement (16) verbunden ist, das den Ablagerost in seiner Gebrauchslage unmittelbar auf dem Fahrgestell (2) abstützt.

## Claims

1. Shopping trolley, comprising a chassis (2), a goods receptacle (4), which is supported on the chassis by means of at least two supports (5) and a storage grating (8) located below the goods receptacle, which base comprises a front, deeper storage surface (9) and a rear, elevated storage surface (10) and is suspended on the chassis (2) to tilt about a horizontal axis, characterised in that the storage grating (8) is constructed in a stepped manner and that the rear storage surface (10) assumes a position inclined rearwards.

2. Shopping trolley according to Claim 1, characterised in that the plane of the rear storage surface (10) encloses approximately a right angle with the plane of the rear wall (6) of the goods receptacle (4).

3. Shopping trolley according to Claim 1, characterised in that the rear storage surface (10) extends exclusively behind the plane defined by the rear wall (6) of the goods receptacle (4).

4. Shopping trolley according to Claim 1, characterised in that a stop (14) is provided in the region of the rear edge of the rear storage surface (10).

5. Shopping trolley according to Claim 1, characterised in that the rear storage surface (10) rests on a transverse strut (15) extending at right angles to the direction of travel.

6. Shopping trolley according to Claim 5, characterised in that the transverse strut (15) connects the supports (5) for the goods receptacle (4) to each other.

7. Shopping trolley according to Claim 5, characterised in that the transverse strut (5) has an adjusting profiled shape supporting the base grating laterally.

8. Shopping trolley according to Claim 1, characterised in that connected to the storage grating (8) in the region of the rear storage surface (10) is a support member (16), which supports the storage grating in its position of use directly on the chassis (2).

## Revendications

1. Chariot d'achat comprenant un châssis (2), un panier à produits (4) qui repose sur le châssis par au moins deux supports (5) et une grille-support (8) placée au-dessous du panier à produits, qui présente une surface de pose antérieure plus basse (9) et une surface de pose postérieure surélevée (10) et est montée pivotante autour d'un axe horizontal sur le châssis (2), caractérisé par le fait que la grille-support (8) est étagée et que la surface de pose postérieure (10) occupe une position inclinée vers l'arrière.

2. Chariot d'achat selon la revendication 1, caractérisé par le fait que le plan de la surface de pose (10) postérieure forme sensiblement un angle droit avec le plan de la paroi arrière (6) du panier à produits (4).

3. Chariot d'achat selon la revendication 1, caractérisé par le fait que la surface de pose (10) postérieure s'étend exclusivement derrière le plan défini par la paroi arrière (6) du panier à produits (4).

4. Chariot d'achat selon la revendication 1, caractérisé par le fait qu'une butée (14) est prévue dans la région du bord arrière de la surface de pose (10) postérieure.

5. Chariot d'achat selon la revendication 1, caractérisé par le fait que la surface de pose (10) postérieure repose sur une traverse (15) qui s'étend transversalement à la direction de déplacement.

6. Chariot d'achat selon la revendication 5, caractérisé par le fait que la traverse (15) relie l'un à l'autre les supports (5) pour le panier à produits (4).

7. Chariot d'achat selon la revendication 5, caractérisé par le fait que la traverse (15) présente une forme profilée qui soutient latéralement et positionne la grille de fond.

8. Chariot d'achat selon la revendication 1, caractérisé par le fait qu'un élément d'appui (16) est lié à la grille-support (8) dans la région de la surface de pose (10) postérieure, lequel élément, dans sa position d'utilisation, prend appui directement sur le châssis (2).
